# EUROPEAN PATENT SPECIFICATION

(11) **EP 3 367 538 B1**
(45) Date of publication and mention of the grant of the patent: **20.10.2021**
(21) Application number: 17174647.2
(22) Date of filing: 07.06.2017
(51) Int. Cl.: H02J 9/00, H02J 1/00, G05F 1/46, G06F 1/26, H02M 1/00, G06F 1/32

(54) **SMART POWER SUPPLY MANAGEMENT FOR HIGH STANDBY POWER SYSTEM**
INTELLIGENTE LEISTUNGSVERSORGUNG FÜR EIN SYSTEM MIT HOHER STANDBY-LEISTUNG
GESTION D'ALIMENTATION INTELLIGENTE POUR SYSTÈME D'ALIMENTATION DE SECOURS ÉLEVÉ

(30) Priority: 23.02.2017 US 201715440789
(43) Date of publication of application: 29.08.2018
(73) Proprietor: Quanta Computer Inc., Taoyuan City 33377 (TW)
(72) Inventor: HUANG, Jen-Hsuen, 333 Taoyuan City (TW); LIN, Fa-Da, 333 Taoyuan City (TW); LIN, Yi-Ping, 333 Taoyuan City (TW)
(74) Representative: Krauns, Christian

(56) References cited:
- WO-A1-2014/209338
- US-A1- 2015 188 429
- US-A1- 2015 277 530

## Description

### Field

This application relates to computer systems, and more particularly to a system and method for managing a power supply.

### Background

Server systems include one or more power supply units (PSUs) to supply the server systems with direct current (DC) power. A PSU may be configured to convert power in one form to another form, such as converting alternating current ("AC") power to direct current ("DC") power.

PSUs can also provide auxiliary and standby power to background systems and sub-systems within an electronic device. For example, even when an electronic device is not fully operational, in standby mode (indicating a mode for maintaining a ready state before the electronic product is normally operated), sleep mode, or is turned off, power may still be needed to power system clocks, system controllers, system monitors and the like. Conventional PSUs typically include several stages of power conversion in order to provide main power as well as standby power.

For example, U.S. patent publication No. US 20150006932 provides a power supply apparatus which varies the state of operating power used for powering a main power supply depending on a load condition. The power supply apparatus includes: a standby power supply unit performing power-conversion on an input power to provide a predetermined standby voltage; and an operating power supply unit changing power transfer paths according to a predetermined load condition of a main power and varying states of an operating voltage used for power-conversion on the main power, to supply the varied operating voltage. The WO 2014/209338 A1 discloses a system comprising a power supply, coupled to an output power and an auxiliary power. The system further comprises a controller to interrupt the output power through a switch coupled to the output. The controller is to interrupt the output power based on the determination that the output power is below an output threshold. The controller is further to interrupt the auxiliary power coupled to the output. The controller is to interrupt the auxiliary power based on the determination that the auxiliary power is below an auxiliary threshold. The US 2015/0188429 A1 discloses a power-supply device for generating an internal power-supply voltage from an externally-provided power supply and a method for controlling the power-supply device. Upon sending out a first power-supply voltage having a first value to first and second power supply lines in a first mode and sending out a second power-supply voltage having a second value lower than the first value to the second power supply line in a second mode, when switching a power-supply device from the first mode to the second mode, the value of the first power-supply voltage generated in a first power-supply circuit is changed to the second value first, the first and second power supply lines are temporarily connected together and then cut off from each other, and then the generating operation of the first power-supply voltage is stopped.

### SUMMARY

The present invention provides a method for managing a power supply unit according to claim 1 and a control circuit for managing a power supply unit as defined in claim 8. Preferred embodiments are defined in dependent claims. The invention is set out in the appended set of claims. The embodiments and/ or examples of the following description which are not covered by the appended claims are considered as not being part of the present invention.

### BRIEF DESCRIPTION OF THE DRAWINGS

These and other sample aspects of the present technology will be described in the detailed description and the appended claims that follow, and in the accompanying drawings, wherein:
**FIG. 1** illustrates a block diagram of a system for managing a power supply in the prior art;
**FIG.** 2 illustrates a block diagram of an example system for managing a power supply, according to certain aspects of the subject technology;
**FIG.** 3 illustrates an example methodology for managing a power supply of a system board by a control circuit.
**FIG.** 4 illustrates an example methodology for managing a power supply of a system board by a control circuit; and
**FIG. 5** illustrates a block diagram of an example computer system.

### DETAILED DESCRIPTION

The subject disclosure provides techniques for managing network configurations in a server system, in accordance with the subject technology. Various aspects of the present technology are described with reference to the drawings. In the following description, for purposes of explanation, numerous specific details are set forth in order to provide a thorough understanding of one or more aspects. It can be evident, however, that the present technology can be practiced without these specific details. In other instances, well-known structures and devices are shown in block diagram form in order to facilitate describing these aspects. The word "exemplary" is used herein to mean "serving as an example, instance, or illustration." Any embodiment described herein as "exemplary" is not necessarily to be construed as preferred or advantageous over other embodiments.

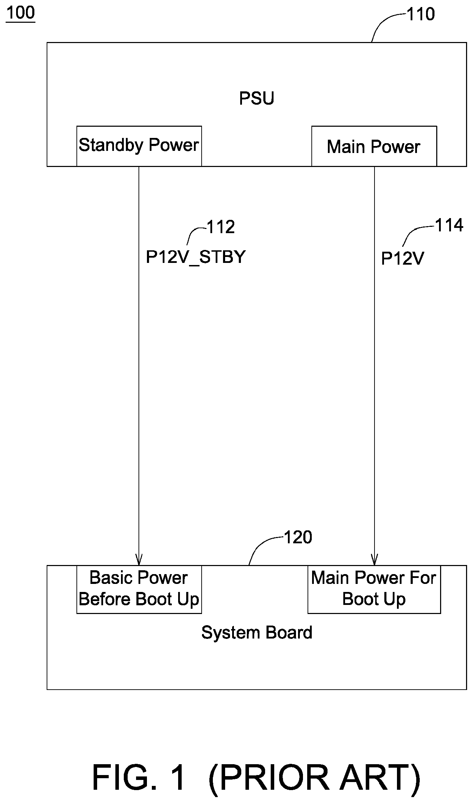

**FIG.** 1 illustrates a block diagram of a system 100 for managing a power supply 110 in the prior art. The system 100 includes the PSU 110 to supply a system board 120 with direct current (DC) power. The PSU 110 may be configured to convert power in one form to another form, such as converting alternating current ("AC") power to DC power.

In addition to main power 114, the PSU 100 also provides standby/auxiliary power 112 to background systems and sub-systems within the system board 120. For example, even when the system board 120 is not fully operational, in standby mode (indicating a mode for maintaining a ready state before the electronic product is normally operated), sleep mode, or is turned off, power may still be needed to power system clocks, system controllers, system monitors and the like.

The PSU includes several stages of power conversion in order to provide main power 114 as well as the standby power 112. The PSU 110 can include a separate independent auxiliary converter in order to provide the standby power 112, in addition to a main converter for providing a main power 114. The PSU supplies the main power 114 to system board 120 through a main converter during an operation of system board 120, and supplies the standby power 112 to the system board 120 through the auxiliary converter during a standby mode.

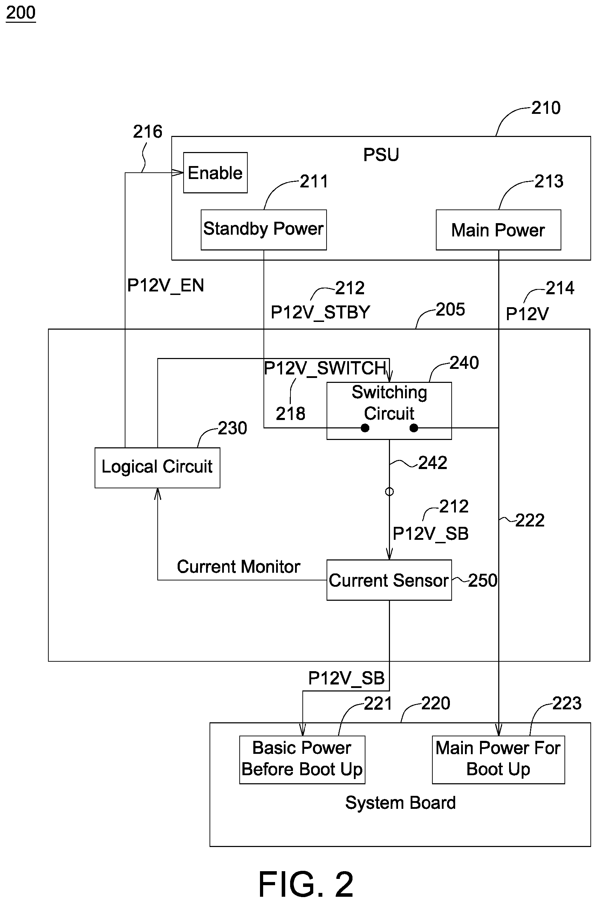

**FIG.** 2 illustrates a block diagram of an example system 200 for managing a power supply 210, according to certain aspects of the subject technology. The system 200 includes the PSU 210 to supply a system board 220 with direct current (DC) power. A control circuit 205 manages the PSU 210.

The PSU 210 may be configured to convert power in one form to another form, such as converting alternating current ("AC") power to DC power. The regulation of PSUs 210 can include incorporating circuitry to tightly control the output voltage and/or current of the PSU 210 to a specific value. The specific value is typically closely maintained despite variations in the load presented to the PSU's output.

In the system 200, the PSU 210 typically converts an AC voltage input into several low-voltage DC power outputs for transmission to various system components. AC to DC conversion is typically performed in stages such as a rectification stage, a pre-regulation stage, a regulator/chopper stage, etc.

In addition to main power 214, the PSU 210 also provides standby/auxiliary power 212 to background systems and sub-systems within the system 200, such as for when the system 200 is in standby mode or powered off (indicating main power of the system 200 is powered off). For example, even when the system board 220 is not fully operational, in standby mode (indicating a mode for maintaining a ready state before the electronic product is normally operated), sleep mode, or is powered off, power may still be needed to power system clocks, system controllers, system monitors and the like.

The PSU 210 can include several stages of power conversion in order to provide main power 214 as well as the standby power 212. The PSU 210 can include a separate independent auxiliary converter in order to provide the standby power 212, in addition to a main converter for providing a main power 214. The PSU 210 supplies the main power 214 to a main power port 223 of the system board 220 during while the system 200 is powered on. The PSU 210 supplies the standby power 212 to the standby power port 221 of the system board 220 while the system 200 is powered off or in standby mode.

The control circuit 205 determines if and when to enable the main power 214 of the PSU 210. The control circuit 205 routes either a standby power port 211 or a main power port 213 of the PSU 210 to a standby power port 221 of the system board 220.

The control circuit 205 allows enabling of the main power 214 of the PSU 210 even when the system 200 is not powered on, such as in cases when a large number of low-power circuits are present in the system 200 that still draw power when the system 200 is powered off or in standby mode. The control circuit 205 shown includes a switching circuit 240, a logical circuit 230, and a sensor 250. It is noted that the control circuit 205 can include different components than what is shown to perform functionalities of the control circuit 205. When the system 200 is powered off or in a standby mode, the PSU 210 initially only provides standby power 212 to the system board 220. Initially, the logic circuit 230 may control the PSU 210 to have the main power 214 disabled.

The sensor 250 monitors at least one electrical parameter for the standby power port of the system board 220. For example, the electrical parameter can include a current level, voltage level, and/or a power level that is consumed by the system board. In some implementations, the electrical parameter includes an average current, voltage, or power consumption over a period of time. In some implementations, the sensor 250 is a power sensor that monitors a power level of the standby power 212. In some implementations, the sensor 250 is a current sensor that measures a current level of the standby power 212. The sensor 250 outputs the at least one electrical parameter to the logic circuit 230.

The logic circuit 230 determines whether the at least one electrical parameter from the sensor 250 meets a criteria. In some implementations, the criteria are met if the power level of consumed by the system board 220 meets or exceeds a threshold power value. In some implementations, the criteria is met if the current level of consumed by the system board 220 meets or exceeds a threshold current value. In some implementations, the criteria are met if the power/current level consumed by the system board 220 is above the threshold power/current level for a specified period of time.

In some implementations, the threshold power/current level is set to a level at or slightly below an amount of power/current that the standby power 212 of the PSU 210 can provide. In some implementations, the threshold power/current level is set by an administrator, before or during installation of the system 200. In some other implementations, the threshold power/current level is automatically determined by a processing circuit (not shown), of the control circuit 205, a baseboard management controller (BMC), or processor of the system 200.

In some implementations, when the at least one electrical parameter from the sensor 250 meets a criteria, the logic circuit 230 sends an enablement signal 216 to the PSU 210 to command the PSU 210 to enable the main power 214. In some implementations, the logic circuit 230 sends a switch signal 218 to the switching circuit 240 to switch the system board 220 to receive power from the main power 214 instead of (or in addition to, in some implementations) the standby power 212 at the standby power port 221 of the system board 220.

When the system 200 is not powered on, the switching circuit 240 initially directs standby power 212 from the PSU 210 through a standby power line 242. If the at least one electrical parameter meets a criteria, the switching circuit 240, in response to receiving the switching signal 218 from logic circuit 230, routes the main power 214 through the standby power line 242. When the system 200 is powered on, the system board 220 receives power from the main power 214 through the main power line 222 at the main power port 223 of the system board 220.

If the at least one electrical parameter ceases to meet the criteria, after previously meeting the criteria (e.g., such as when standby power consumption by the system 200 is reduced), the logic circuit 230 stops sending the enablement signal 216 to the PSU 210, which then causes the PSU 210 to disable the main power 214. Additionally, the logic circuit 230 commands the switching circuit 240 using the switch signal 218 to reroute the standby power port 221 of the system board 220 to the standby power port 211 of the PSU 210.

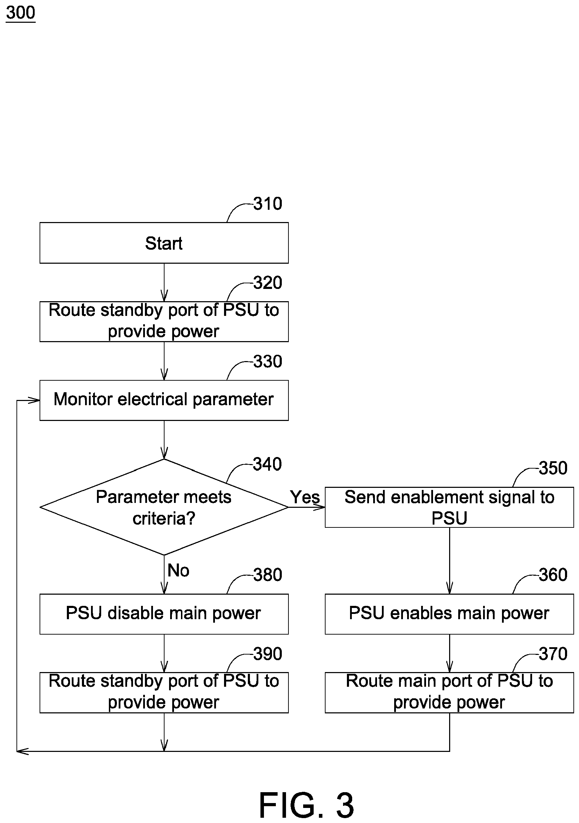

**FIG.** 3 illustrates a flow chart 300 of an exemplary method for managing a power supply. The method starts at step 310. At step 320, a control circuit routes standby power from a standby port of a PSU to a system board.

At step 330, a sensor monitors at least one electrical parameter for the standby power port. For example, the at least one electrical parameter can include current, power, or voltage. The sensor can be at least one of a current, power, or voltage sensor.

At step 340, a logic circuit determines whether the at least one electrical parameter meets a criteria. For example, as shown in FIG 2, the logic circuit 230 determines whether the current level read by the current sensor 250 has reached the current threshold.

If the current reaches the current threshold, at step 350, the logic circuit sends an enablement signal to the PSU. For example, as shown in FIG. 2, the logic circuit 230 sends the enablement signal 216 to the PSU 210.

At step 360, the PSU enables main power, in response to receiving the enablement signal from the logic circuit. For example, as shown in FIG. 2, the PSU 210 enables the main power 214 when it receives the enablement signal 216 from the logic circuit 230 at step 370 . The method then loops back to step 330.

If the current is under the current threshold, at step 340, the PSU disables (or does not enable) the main power at step 380. Thereafter, at step 390, the control circuit starts or continues to route standby power from a standby port of the PSU to the system board. The method then loops back to step 330.

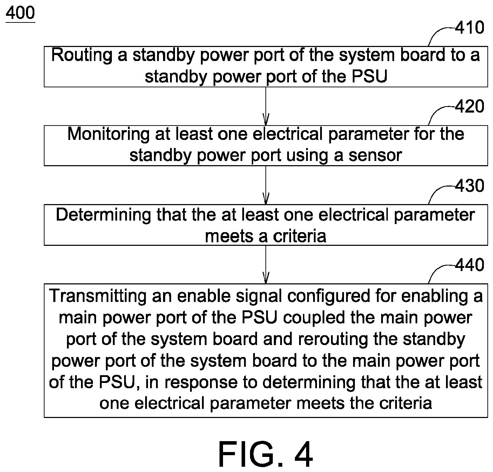

**FIG. 4** illustrates an example methodology 400 for managing a PSU of a system board by a control circuit. At step 410, the control circuit routes a standby power port of the system board to a standby power port of the PSU.

At step 420, the control circuit monitors at least one electrical parameter for the standby power port of the system board by using a sensor. In some implementations, the sensor is configured for generating a current signal corresponding to an amount of electrical current flowing into the standby port of the system board. In some implementations, the monitoring comprises calculating the at least one electrical parameter based on the current signal. In some implementations, the at least one electrical parameter comprises at least one of a measure of electrical current or a measure of electrical power.

At step 430, the control circuit determines that the at least one electrical parameter meets a criteria.

At step 440, the control circuit transmits an enable signal configured for enabling a main power port of the PSU coupled the main power port of the system board and rerouting the standby power port of the system board to the main power port of the PSU, in response to determining that the at least one electrical parameter meets the criteria.

In some implementations, the control circuit further determines that the at least one electrical parameter no longer meets the criteria and transmits a disable signal configured for disabling a main power port of the PSU coupled to the main power port of the system board and rerouting the standby power port of the system board to the standby power port of the PSU, in response to determining that the at least one electrical parameter no longer meets the criteria. In some implementations, transmitting the disable signal comprises discontinuing the enable signal.

In some implementations, the standby power port of the system board is selectively coupled to at least one of the main power port of the PSU or the standby power port of the PSU via a switching circuit, and the routing comprises configuring the switching circuit to couple the standby power port of the PSU to the standby power port of the system board, and the re-routing comprises reconfiguring the switch circuit to couple the main power port of the PSU to the standby power port of the system board.

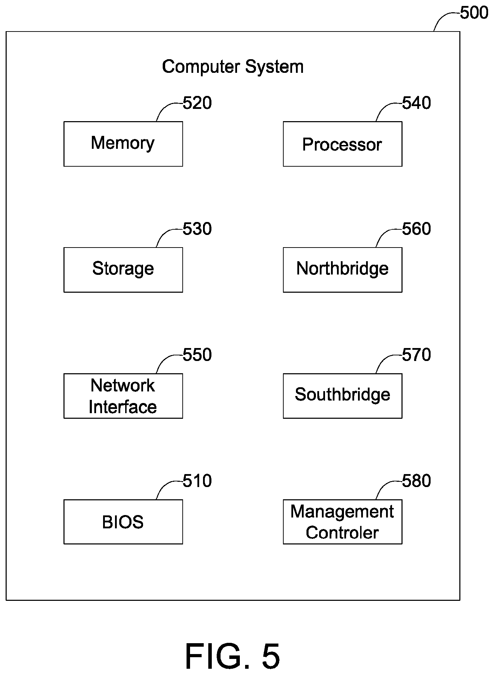

**FIG.** 5 illustrates a block diagram of an example computer system 500. The computer system 500 can include a processor 540, a network interface 550, a management controller 580, a memory 520, a storage 530, a Basic Input/Output System (BIOS) 510, and a northbridge 560, and a southbridge 570.

The computer system 500 can be, for example, a server (e.g., one of many rack servers in a data center) or a personal computer. The processor (e.g., central processing unit (CPU)) 540 can be a chip on a motherboard that can retrieve and execute programming instructions stored in the memory 520. The processor 540 can be a single CPU with a single processing core, a single CPU with multiple processing cores, or multiple CPUs. One or more buses (not shown) can transmit instructions and application data between various computer components such as the processor 540, memory 520, storage 530, and networking interface 550.

The memory 520 can include any physical device used to temporarily or permanently store data or programs, such as various forms of random-access memory (RAM). The storage 530 can include any physical device for non-volatile data storage such as a HDD or a flash drive. The storage 530 can have a greater capacity than the memory 520 and can be more economical per unit of storage, but can also have slower transfer rates.

The BIOS 510 can include a Basic Input/Output System or its successors or equivalents, such as an Extensible Firmware Interface (EFI) or Unified Extensible Firmware Interface (UEFI). The BIOS 510 can include a BIOS chip located on a motherboard of the computer system 500 storing a BIOS software program. The BIOS 510 can store firmware executed when the computer system is first powered on along with a set of configurations specified for the BIOS 510. The BIOS firmware and BIOS configurations can be stored in a non-volatile memory (e.g., NVRAM) or a ROM such as flash memory. Flash memory is a non-volatile computer storage medium that can be electronically erased and reprogrammed.

The BIOS 510 can be loaded and executed as a sequence program each time the computer system 500 is started. The BIOS 510 can recognize, initialize, and test hardware present in a given computing system based on the set of configurations. The BIOS 510 can perform self-test, such as a Power-on-Self-Test (POST), on the computer system 500. This self-test can test functionality of various hardware components such as hard disk drives, optical reading devices, cooling devices, memory modules, expansion cards and the like. The BIOS can address and allocate an area in the memory 520 in to store an operating system. The BIOS 510 can then give control of the computer system to the OS.

The BIOS 510 of the computer system 500 can include a BIOS configuration that defines how the BIOS 510 controls various hardware components in the computer system 500. The BIOS configuration can determine the order in which the various hardware components in the computer system 500 are started. The BIOS 510 can provide an interface (e.g., BIOS setup utility) that allows a variety of different parameters to be set, which can be different from parameters in a BIOS default configuration. For example, a user (e.g., an administrator) can use the BIOS 510 to specify clock and bus speeds, specify what peripherals are attached to the computer system, specify monitoring of health (e.g., fan speeds and CPU temperature limits), and specify a variety of other parameters that affect overall performance and power usage of the computer system.

The management controller 580 can be a specialized microcontroller embedded on the motherboard of the computer system. For example, the management controller 580 can be a BMC or a RMC. The management controller 580 can manage the interface between system management software and platform hardware. Different types of sensors built into the computer system can report to the management controller 580 on parameters such as temperature, cooling fan speeds, power status, operating system status, etc. The management controller 580 can monitor the sensors and have the ability to send alerts to an administrator via the network interface 550 if any of the parameters do not stay within preset limits, indicating a potential failure of the system. The administrator can also remotely communicate with the management controller 580 to take some corrective action such as resetting or power cycling the system to restore functionality.

The northbridge 560 can be a chip on the motherboard that can be directly connected to the processor 540 or can be integrated into the processor 540. In some instances, the northbridge 560 and the southbridge 570 can be combined into a single die. The northbridge 560 and the southbridge 570, manage communications between the processor 540 and other parts of the motherboard. The northbridge 560 can manage tasks that require higher performance than the southbridge 570. The northbridge 560 can manage communications between the processor 540, the memory 520, and video controllers (not shown). In some instances, the northbridge 560 can include a video controller.

The southbridge 570 can be a chip on the motherboard connected to the northbridge 560, but unlike the northbridge 560, is not directly connected to the processor 540. The southbridge 570 can manage input/output functions (e.g., audio functions, BIOS, Universal Serial Bus (USB), Serial Advanced Technology Attachment (SATA), Peripheral Component Interconnect (PCI) bus, PCI eXtended (PCI-X) bus, PCI Express bus, Industry Standard Architecture (ISA) bus, Serial Peripheral Interface (SPI) bus, Enhanced Serial Peripheral Interface (eSPI) bus, System Management Bus (SMBus), etc.) of the computer system 500. The southbridge 570 can be connected to or can include within the southbridge 570 the management controller 580, Direct Memory Access (DMAs) controllers, Programmable Interrupt Controllers (PICs), and a real-time clock.

The various illustrative logical blocks, modules, and circuits described in connection with the disclosure herein can be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the disclosure herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium can be integral to the processor. The processor and the storage medium can reside in an ASIC. The ASIC can reside in a user terminal. In the alternative, the processor and the storage medium can reside as discrete components in a user terminal.

In one or more exemplary designs, the functions described can be implemented in hardware, software, firmware, or any combination thereof. If implemented in software, the functions can be stored on or transmitted over as one or more instructions or code on a non-transitory computer-readable medium. Non-transitory computer-readable media includes both computer storage media and communication media including any medium that facilitates transfer of a computer program from one place to another. A storage media can be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Disk and disc, as used herein, includes compact disc (CD), laser disc, optical disc, digital versatile disc (DVD), floppy disk and blue ray disc where disks usually reproduce data magnetically, while discs reproduce data optically with lasers. Combinations of the above should also be included within the scope of non-transitory computer-readable media.

## Claims

1. A method for managing a power supply unit (100, 110, 210) associated with a system board (120, 220), by a control circuit (205), wherein the method comprises the following steps of:
(410) routing a standby power port (211, 221) of the system board (120, 220) to a standby power port (211, 221) of the power supply unit (100, 110, 210);
(420) monitoring at least one electrical parameter for the standby power port (211, 221) of the system board (120, 220) by using a sensor (250);
(430) determining that the at least one electrical parameter meets a criterion; the method being **characterised by** further comprising the following steps of:
(440) transmitting an enable signal configured for enabling a main power port (213, 223) of the power supply unit (100, 110,210) and rerouting the standby power port (211, 221) of the system board (120, 220) to the main power port (213, 223) of the power supply unit (100, 110, 210) when the system board is not fully operational, in standby mode, in sleep mode, or is power off, in response to determining that the at least one electrical parameter meets the criterion,
wherein the criterion is met if a power level consumed by the system board (120, 220) meets or exceeds a threshold power value, or the criterion is met if a current level consumed by the system board (120, 220) meets or exceeds a threshold current value.

2. The method of claim 1, further comprising:
determining that the at least one electrical parameter no longer meets the criteria; and
transmitting a disable signal configured for disabling the main power port (213, 223) of the power supply unit (100, 110, 210) and rerouting the standby power port (211, 221) of the system board (120, 220) to the standby power port (211, 221) of the power supply unit (100, 110, 210), in response to determining that the at least one electrical parameter no longer meets the criteria.

3. The method of claim 2, wherein transmitting the disable signal comprises discontinuing the enable signal.

4. The method of anyone of the claims 1 to 3, wherein the sensor (250) is configured for generating a current signal corresponding to an amount of electrical current flowing into the standby port of the system board (120, 220).

5. The method of claim 4, wherein the monitoring comprises calculating the at least one electrical parameter based on the current signal.

6. The method of claim 5, wherein the at least one electrical parameter comprises at least one of a measure of electrical current or a measure of electrical power.

7. The method of anyone of the claim 1, wherein the standby power port (211, 221) of the system board (120, 220) is selectively coupled to at least one of the main power port (213, 223) of the power supply unit (100, 110, 210) or the standby power port (211, 221) of the power supply unit (100, 110, 210) via a switching circuit (240); and
wherein the routing comprises configuring the switching circuit (240) to couple the standby power port (211, 221) of the power supply unit (100, 110, 210) to the standby power port (211, 221) of the system board (120, 220), and wherein the re-routing comprises reconfiguring the switch circuit (240) to couple the main power port (213, 223) of the power supply unit (100, 110, 210) to the standby power port (211, 221) of the system board (120, 220).

8. A control circuit (205) for managing a power supply unit (100, 110, 210) associated with a system board (120, 220), wherein the control circuit (205) comprises:
a switching circuit (240) configured to selectively couple a standby power port (211, 221) of the system board (120, 220) to one of a standby power port (211, 221) of the power supply unit (100, 110, 210) or a main power port (213, 223) of the power supply unit (100, 110, 210);
a sensor (250) configured to generate current signals corresponding to a current flowing into the standby power port (211, 221) of the system board (120, 220); and
a logic circuit (230) configured to cause the switching circuit (240) to initially route the standby power port (211, 221) of the system board (120, 220) to the standby power port (211, 221) of the power supply unit (100, 110, 210);
determine, based on the current signals, that at least one electrical parameter for the standby power port (211, 221) of the system board (120, 220) meets a criterion; and **characterized by**
generate an enable signal configured for enabling the main power port (213, 223) of the power supply unit (100, 110, 210) and causing the switching circuit (240) to route the standby power port (211, 221) of the system board (120, 220) to the main power port (213, 223) of the power supply unit (100, 110, 210) when the system board is not fully operational, in standby mode, in sleep mode, or is power off, in response to determining that the at least one electrical parameter meets the criterion,
wherein the criterion is met if a power level consumed by the system board (120, 220) meets or exceeds a threshold power value, or the criterion is met if a current level consumed by the system board (120, 220) meets or exceeds a threshold current value.

9. The control circuit (205) of claim 8, wherein the logic circuit (205, 230) is further configured to:
determine that the at least one electrical parameter no longer meets the criteria; and
transmit a disable signal configured for disabling a main power port (213, 223) of the power supply unit (100, 110, 210) and reroute the standby power port (211, 221) of the system board (120, 220) to the standby power port (211, 221) of the power supply unit (100, 110, 210), in response to determining that the at least one electrical parameter no longer meets the criterion.

10. The control circuit (205) of claim 9, wherein transmitting the disable signal comprises discontinuing the enable signal.

11. The control circuit (205) of anyone of the claims 8 to 10, wherein the sensor (250) is configured to generate a current signal corresponding to an amount of electrical current flowing into the standby port of the system board (120, 220).

12. The control circuit (205) of claim 11, wherein the logic circuit (205, 230) is further configured to calculate the at least one electrical parameter based on the current signal.

13. The control circuit (205) of anyone of the claims 8 to 12, wherein the at least one electrical parameter comprises at least one of a measure of electrical current or a measure of electrical power.

14. The control circuit (205) of anyone of the claims 8 to 13, wherein the standby power port (211, 221) of the system board (120, 220) is selectively coupled to at least one of the main power port (213, 223) of the power supply unit (100, 110, 210) or the standby power port (211, 221) of the power supply unit (100, 110, 210) via the switching circuit (240); and
wherein the routing comprises configuring the switching circuit (240) to couple the standby power port (211, 221) of the power supply unit (100, 110, 210) to the standby power port (211, 221) of the system board (120, 220), and wherein the re-routing comprises reconfiguring the switch circuit (240) to couple the main power port (213, 223) of the power supply unit (100, 110, 210) to the standby power port (211, 221) of the system board (120, 220).

## Patentansprüche

1. Verfahren zu Verwaltung eines Netzteils (100, 110, 210), das einer Hauptplatine (120, 220) zugeordnet ist, durch eine Steuerschaltung (205), wobei das Verfahren die folgenden Schritte umfasst:
(410) ein Leiten eines Reservestromanschlusses (211, 221) der Hauptplatine (120, 220) an einen Reservestromanschluss (211, 221) des Netzteils (100, 110, 210);
(420) ein Überwachen von mindestens einem elektrischen Parameter für den Reservestromanschluss (211, 221) der Hauptplatine (120, 220) mittels eines Sensors (250);
(430) ein Bestimmen, dass mindestens ein elektrischer Parameter ein Kriterium erfüllt; wobei das Verfahren **dadurch gekennzeichnet ist, dass** es ferner folgende Schritte umfasst:
(440) ein Übertragen eines Freigabesignals, das ausgestaltet ist, um den Hauptstromanschluss (213, 223) des Netzteils (100, 110, 210) freizugeben und ein Umleiten des Reservestromanschlusses (211, 221) der Hauptplatine (120, 220) an den Hauptstromanschluss (213, 223) des Netzteils (100, 110, 210), falls die Hauptplatine nicht vollständig betriebsbereit, im Betriebsbereitschaft, im Ruhezustand oder ausgeschaltet ist, als Antwort auf die Bestimmung, dass mindestens ein elektrischer Parameter das Kriterium erfüllt,
wobei das Kriterium erfüllt ist, falls ein Leistungsniveau, das von der Hauptplatine (120, 220) verbraucht wird, einen bestimmten Leistungsschwellenwert erreicht oder übertrifft, oder wobei das Kriterium erfüllt ist, falls der Strompegel, der von der Hauptplatine (120, 220) verbraucht wird, einen Stromschwellenwert erreicht oder übertrifft.

2. Verfahren nach Anspruch 1, welches ferner umfasst:
ein Bestimmen, dass mindestens ein elektrischer Parameter nicht länger die Kriterien erfüllt; und
ein Übertragen eines Deaktivierungssignals, das ausgestaltet ist, um den Hauptstromanschluss (213, 223) des Netzteils (100, 110, 210) zu deaktivieren und den Reservestromanschluss (211, 221) der Hauptplatine (120, 220) an den Reservestromanschluss (211,221) des Netzteils (100, 110, 210) als Antwort auf die Bestimmung, dass mindestens ein elektrischer Parameter die Kriterien nicht mehr erfüllt, umzuleiten.

3. Verfahren nach Anspruch 2, wobei das Übertragen des Deaktivierungssignals ein Unterbrechen des Aktivierungssignals umfasst.

4. Verfahren nach einem der Ansprüche 1 bis 3, wobei der Sensor (250) ausgestaltet ist, um ein Stromsignal, das einer elektrischen Strommenge entspricht, die in den Reserveanschluss der Hauptplatine (120, 220) fließt, zu erzeugen.

5. Verfahren nach Anspruch 4, wobei das Überwachen ein Berechnen des mindestens einen elektrischen Parameters basierend auf dem Stromsignal umfasst.

6. Verfahren nach Anspruch 5, wobei mindestens einer von dem elektrischen Parameter mindestens eine Messung des elektrischen Stroms oder eine Messung der elektrischen Leistung aufweist.

7. Verfahren nach einem der Ansprüche 1 bis 6, wobei der Reservestromanschluss (211, 221) der Hauptplatine (120, 220) selektiv mit mindestens dem Hauptstromanschluss (213,223) des Netzteils (100, 110, 210) oder mit dem Reservestromanschluss (211, 221) des Netzteils (100, 110, 210) mittels eines Schaltkreises (240) verbunden wird; und
wobei das Leiten ein Konfigurieren des Schaltkreises (240) umfasst, um den Reservestromanschluss (211, 221) des Netzteils (100, 110, 211) mit dem Reservestromanschluss (211, 221) der Hauptplatine (120, 220) zu verbinden, und wobei das Umleiten ein Umkonfigurieren des Schaltkreises (240) umfasst, um den Hauptstromanschluss (213, 223) des Netzteils (100, 110, 210) mit dem Reservestromanschluss (211, 221) der Hauptplatine (120, 220) zu verbinden.

8. Steuerschaltung (205) zur Verwaltung eines Netzteils (100, 110, 210), wobei die Steuerschaltung (205) aufweist:
einen Schaltkreis (240), der ausgestaltet ist, um selektiv einen Reservestromanschluss (211, 221) der Hauptplatine (120, 220) mit dem Reservestromanschluss (211, 221) des Netzteils (100, 110, 210) oder mit dem Hauptstromanschluss (213, 223) des Netzteils (100, 110, 210) zu verbinden;
einen Sensor (250), der ausgestaltet ist, um Stromsignale, die einem Strom in den Reservestromanschluss (211, 221) der Hauptplatine (120, 220) entsprechen, zu erzeugen; und
eine Logikschaltung (230), die ausgestaltet ist,
um zu bewirken, dass der Schaltkreis (240) am Anfang den Reservestromanschluss (211, 221) der Hauptplatine (120, 220) an den Reservestromanschluss (211, 221) des Netzteils (100, 110, 210) leitet;
um basierend auf dem Stromsignal zu bestimmen, dass mindestens ein elektrischer Parameter für den Reservestromanschluss (211, 221) der Hauptplatine (120, 220) ein Kriterium erfüllt; und **gekennzeichnet durch**
ein Erzeugen eines Freigabesignals, dass ausgestaltet ist, um den Hauptstromanschluss (213, 223) des Netzteils (100, 110, 210) freizugeben und dann den Schaltkreis (240) zu veranlassen, den Reservestromanschluss (211, 221) der Hauptplatine (120, 220) an den Hauptstromanschluss (213, 223) des Netzteils (100, 110, 210) zu leiten, wenn die Hauptplatine nicht vollständig betriebsbereit, im Betriebsbereitschaft, im Ruhezustand oder ausgeschalten ist, als Antwort auf das Bestimmen, dass mindestens ein elektrischer Parameter ein Kriterium erfüllt,
wobei das Kriterium erfüllt ist, wenn das Leistungsniveau, das von der Hauptplatine (120, 220) verbraucht wird, einen Leistungsschwellenwert erreicht oder übertrifft, oder wenn der Strompegel, der von der Hauptplatine (120, 220) verbraucht wird, einen Stromschwellenwert erreicht oder übertrifft.

9. Steuerschaltung (205) nach Anspruch 8, wobei die Logikschaltung (205, 230) weiter ausgestaltet ist,
um zu bestimmen, dass mindestens ein elektrischer Parameter nicht länger die Kriterien erfüllt; und
um ein Deaktivierungssignal zu übertragen, das ausgestaltet ist, um den Hauptstromanschluss (213, 223) des Netzteils (100, 110,210) zu deaktivieren und den Reservestromanschluss (211, 221) der Hauptplatine (120, 220) an den Reservestromanschluss (211, 221) des Netzteils (100, 110, 210) als Antwort auf das Bestimmen, dass mindestens ein elektrisches Signal nicht länger das Kriterium erfüllt, umzuleiten.

10. Steuerschaltung (205) nach Anspruch 9, wobei das Übertragen des Deaktivierungssignals ein Unterbrechen des Freigabesignals umfasst.

11. Steuerschaltung (205) nach einem der Ansprüche 8 bis 10, wobei der Sensor (250) ausgestaltet ist, um ein Stromsignal zu erzeugen, das einer elektrischen Strommenge entspricht, die in den Reserveanschluss der Hauptplatine (120, 220) fließt.

12. Steuerschaltung (205) nach Anspruch 11, wobei die Logikschaltung (205, 230) weiter ausgestaltet ist, um mindestens einen elektrischen Parameter basierend auf dem Stromsignal zu berechnen.

13. Steuerschaltung (205) nach einem der Ansprüche 8 bis 12, wobei mindestens einer von dem elektrischen Parameter mindestens eine Messung des elektrischen Stroms oder eine Messung der elektrischen Leistung aufweist.

14. Steuerschaltung (205) nach einem der Ansprüche 8 bis 13, wobei der Reservestromanschluss (211, 221) der Hauptplatine (120, 220) selektiv mit mindestens dem Hauptstromanschluss (213, 223) des Netzteils (100, 110, 210) oder mit dem Reservestromanschluss des Netzteils (100, 110, 210) mittels eines Schaltkreises (240) verbunden wird; und
wobei das Leiten ein Konfigurieren des Schaltkreises (240) umfasst, um den Reservestromanschluss (211, 221) des Netzteils (100, 110, 210) mit dem Reservestromanschluss (211, 221) der Hauptplatine (120, 220) zu verbinden, und wobei das Umleiten ein Rekonfigurieren der Steuerschaltung (240) umfasst, um den Hauptstromanschluss (213, 223) des Netzteils (100, 110, 210) mit dem Reservestromanschluss (211, 221) der Hauptplatine (120, 220) zu verbinden.

## Revendications

1. Procédé de gestion d'une unité d'alimentation électrique (100, 110, 210) associée à une carte de système (120, 220), par un circuit de commande (205), dans lequel le procédé comprend les étapes suivantes : (410) l'acheminement d'un port d'alimentation de secours (211, 221) de la carte de système (120, 220) vers un port d'alimentation de secours (211, 221) de l'unité d'alimentation électrique (100, 110, 210) ;
(420) la surveillance d'au moins un paramètre électrique pour le port d'alimentation de secours (211, 221) de la carte de système (120, 220) en utilisant un capteur (250) ;
(430) la détermination que l'au moins un paramètre électrique satisfait un critère ;
le procédé étant **caractérisé en ce qu'**il comprend en outre les étapes suivantes :
(440) la transmission d'un signal d'activation configuré pour activer un port d'alimentation principale (213, 223) de l'unité d'alimentation électrique (100, 110, 210) et réacheminer le port d'alimentation de secours (211, 221) de la carte de système (120, 220) vers le port d'alimentation principale (213, 223) de l'unité d'alimentation électrique (100, 110, 210) quand la carte de système est en fonctionnement non total, en mode de secours, en mode de veille ou est mise hors tension, en réponse à la détermination que l'au moins un paramètre électrique satisfait le critère,
dans lequel le critère est satisfait si un niveau de puissance consommé par la carte de système (120, 220) satisfait ou dépasse une valeur de puissance de seuil, ou le critère est satisfait si un niveau de courant consommé par la carte de système (120, 220) satisfait ou dépasse une valeur de courant de seuil.

2. Procédé selon la revendication 1, comprenant en outre :
la détermination que l'au moins un paramètre électrique ne satisfait plus le critère ; et
la transmission d'un signal de désactivation configuré pour désactiver le port d'alimentation principale (213, 223) de l'unité d'alimentation électrique (100, 110, 210) et réacheminer le port d'alimentation de secours (211, 221) de la carte de système (120, 220) vers le port d'alimentation de secours (211, 221) de l'unité d'alimentation électrique (100, 110, 210), en réponse à la détermination que l'au moins un paramètre électrique ne satisfait plus le critère.

3. Procédé selon la revendication 2, dans lequel la transmission du signal de désactivation comprend l'interruption du signal d'activation.

4. Procédé selon l'une quelconque des revendications 1 à 3, dans lequel le capteur (250) est configuré pour générer un signal de courant correspondant à une quantité de courant électrique circulant dans le port de secours de la carte de système (120, 220).

5. Procédé selon la revendication 4, dans lequel la surveillance comprend le calcul de l'au moins un paramètre électrique sur la base du signal de courant.

6. Procédé selon la revendication 5, dans lequel l'au moins un paramètre électrique comprend au moins un parmi une mesure de courant électrique ou une mesure de puissance électrique.

7. Procédé selon la revendication 4, dans lequel le port d'alimentation de secours (211, 221) de la carte de système (120, 220) est couplé de manière sélective à au moins un parmi le port d'alimentation principale (213, 223) de l'unité d'alimentation électrique (100, 110, 210) ou le port d'alimentation de secours (211, 221) de l'unité d'alimentation électrique (100, 110, 210) via un circuit de commutation (240) ; et
dans lequel l'acheminement comprend la configuration du circuit de commutation (240) pour coupler le port d'alimentation de secours (211, 221) de l'unité d'alimentation électrique (100, 110, 210) au port d'alimentation de secours (211, 221) de la carte de système (120, 220), et dans lequel le réacheminement comprend la reconfiguration du circuit de commutation (240) pour coupler le port d'alimentation principale (213, 223) de l'unité d'alimentation électrique (100, 110, 210) au port d'alimentation de secours (211, 221) de la carte de système (120, 220).

8. Circuit de commande (205) pour la gestion d'une unité d'alimentation électrique (100, 110, 210) associée à une carte de système (120, 220), dans lequel le circuit de commande (205) comprend :
un circuit de commutation (240) configuré pour coupler de manière sélective un port d'alimentation de secours (211, 221) de la carte de système (120, 220) à un parmi un port d'alimentation de secours (211, 221) de l'unité d'alimentation électrique (100, 110, 210) ou un port d'alimentation principale (213, 223) de l'unité d'alimentation électrique (100, 110, 210) ;
un capteur (250) configuré pour générer des signaux de courant correspondant à un courant circulant dans le port d'alimentation de secours (211, 221) de la carte de système (120, 220) ; et
un circuit logique (230) configuré pour amener le circuit de commutation (240) à acheminer initialement le port d'alimentation de secours (211, 221) de la carte de système (120, 220) vers le port d'alimentation de secours (211, 221) de l'unité d'alimentation électrique (100, 110, 210) ;
déterminer, sur la base des signaux de courant, qu'au moins un paramètre électrique pour le port d'alimentation de secours (211, 221) de la carte de système (120, 220) satisfait un critère ; et **caractérisé par** ce qui suit générer un signal d'activation configuré pour activer le port d'alimentation principale (213, 223) de l'unité d'alimentation électrique (100, 110, 210) et amener le circuit de commutation (240) à acheminer le port d'alimentation de secours (211, 221) de la carte de système (120, 220) vers le port d'alimentation principale (213, 223) de l'unité d'alimentation électrique (100, 110, 210) quand la carte de système est en fonctionnement non total, en mode de secours, en mode de veille ou est mise hors tension, en réponse à la détermination que l'au moins un paramètre électrique satisfait le critère,
dans lequel le critère est satisfait si un niveau de puissance consommé par la carte de système (120, 220) satisfait ou dépasse une valeur de puissance de seuil, ou le critère est satisfait si un niveau de courant consommé par la carte de système (120, 220) satisfait ou dépasse une valeur de courant de seuil.

9. Circuit de commande (205) selon la revendication 8, dans lequel le circuit logique (205, 230) est configuré en outre pour :
déterminer que l'au moins un paramètre électrique ne satisfait plus le critère ; et
transmettre un signal de désactivation configuré pour désactiver un port d'alimentation principale (213, 223) de l'unité d'alimentation électrique (100, 110, 210) et
réacheminer le port d'alimentation de secours (211, 221) de la carte de système (120, 220) vers le port d'alimentation de secours (211, 221) de l'unité d'alimentation électrique (100, 110, 210), en réponse à la détermination que l'au moins un paramètre électrique ne satisfait plus le critère.

10. Circuit de commande (205) selon la revendication 9, dans lequel la transmission du signal de désactivation comprend l'interruption du signal d'activation.

11. Circuit de commande (205) selon l'une quelconque des revendications 8 à 10, dans lequel le capteur (250) est configuré pour générer un signal de courant correspondant à une quantité de courant électrique circulant dans le port de secours de la carte de système (120, 220).

12. Circuit de commande (205) selon la revendication 11, dans lequel le circuit logique (205, 230) est configuré en outre pour calculer l'au moins un paramètre électrique sur la base du signal de courant.

13. Circuit de commande (205) selon l'une quelconque des revendications 8 à 12, dans lequel l'au moins un paramètre électrique comprend au moins un parmi une mesure de courant électrique ou une mesure de puissance électrique.

14. Circuit de commande (205) selon l'une quelconque des revendications 8 à 13, dans lequel le port d'alimentation de secours (211, 221) de la carte de système (120, 220) est couplé de manière sélective à au moins un parmi le port d'alimentation principale (213, 223) de l'unité d'alimentation électrique (100, 110, 210) ou le port d'alimentation de secours (211, 221) de l'unité d'alimentation électrique (100, 110, 210) via le circuit de commutation (240) ; et
dans lequel l'acheminement comprend la configuration du circuit de commutation (240) pour coupler le port d'alimentation de secours (211, 221) de l'unité d'alimentation électrique (100, 110, 210) au port d'alimentation de secours (211, 221) de la carte de système (120, 220), et dans lequel le réacheminement comprend la reconfiguration du circuit de commutation (240) pour coupler le port d'alimentation principale (213, 223) de l'unité d'alimentation électrique (100, 110, 210) au port d'alimentation de secours (211, 221) de la carte de système (120, 220).
